# EUROPÄISCHE PATENTSCHRIFT

(11) **EP 3 883 706 B1**
(45) Veröffentlichungstag und Bekanntmachung des Hinweises auf die Patenterteilung: **20.04.2022**
(21) Anmeldenummer: 19805560.0
(22) Anmeldetag: 08.11.2019
(51) Int. Cl.: B22D 11/16, B22D 11/07, B22D 11/108, G01B 15/02, G01F 23/284, G01F 23/28

(54) **DICKENMESSUNG EINER SCHICHT EINES GIESSPULVERS IN EINER KOKILLE**
THICKNESS MEASUREMENT OF A LAYER OF A CASTING POWDER IN A MOLD
MESURE DE L'ÉPAISSEUR D'UNE COUCHE D'UNE POUDRE DE COULÉE DANS UNE LINGOTIÈRE

(30) Priorität: 21.11.2018 AT 510202018
(43) Veröffentlichungstag der Anmeldung: 29.09.2021
(73) Patentinhaber: Primetals Technologies Austria GmbH, 4031 Linz (AT)
(72) Erfinder: DOLLHÄUBL, Paul Felix, 4180 Zwettl an der Rodl (AT); KAINEDER, Alexander, 4020 Linz (AT); LANG, Oliver, 4407 Dietach (AT); LEITNER, Stefan, 4154 Kollerschlag (AT); STELZER, Andreas, 4040 Linz (AT)
(74) Vertreter: Metals@Linz
(86) Internationale Anmeldenummer: PCT/EP2019/080691
(87) Internationale Veröffentlichungsnummer: WO 2020/104217

(56) Entgegenhaltungen:
- EP-A1- 2 090 387
- WO-A1-00/11494
- WO-A1-96/36449
- WO-A1-2016/016967
- US-A- 5 629 706
- US-A1- 2004 212 529

## Beschreibung

### Gebiet der Technik

Die vorliegende Erfindung betrifft ein Verfahren und eine Vorrichtung zur Messung einer Dicke einer Schicht eines Gießpulvers in einer Kokille zum Stranggießen.

Das sogenannte Bad eines flüssigen Metalls, typischerweise eine Stahlschmelze, in einem metallurgischen Gefäß, wie z.B. der Gießspiegel (Meniskus) in einer Kokille oder der Badspiegel in einem Gießverteiler, wird beim Stranggießen durch eine Schicht eines Gieß- oder Abdeckpulvers abgedeckt. Der pulverförmige Stoff zum Abdecken des Bads in dem Gießverteiler wird als Abdeckpulver bezeichnet; das Pulver zum Abdecken des Bads in der Kokille wird Gießpulver genannt. Durch das Abdecken des Bads wird eine Oxidation des flüssigen Metalls hintangehalten. Außerdem stellt das Gießpulver eine ausreichende Schmierung zwischen der oszillierenden Kokille und dem stranggegossenen Strang sicher. Einerseits muss die Schicht des Gieß- oder Abdeckpulvers eine gewisse Mindestdicke aufweisen um die Oxidation effektiv verhindern zu können; andererseits darf die Schicht aber auch nicht zu dick sein, da sich dies negativ auf den Pulververbrauch und auf die Qualität des stranggegossenen Strangs auswirkt.

### Stand der Technik

Der Nutzen einer Gießpulverschicht sowie die Notwendigkeit, die Dicke einer Gießpulverschicht in einer Kokille während des Stranggießens annähernd konstant zu halten, sind z.B. aus der WO 96/36449 A1 bekannt. Grundsätzlich ist es auch bekannt, die Dicke einer Schicht eines Gieß- oder Abdeckpulvers zu messen. Das Gieß- oder Abdeckpulvers wird entweder manuell oder automatisiert (z.B. durch einen Manipulator oder Roboter) auf das Bad aufgebracht.

Die Dicke einer Schicht eines Gieß- oder Abdeckpulvers kann entweder direkt oder indirekt gemessen werden. Bei der *direkten Messung* wird die Oberflächentemperatur der Schicht, die ein flüssiges Bad zumindest teilweise abdeckt, z.B. von einer Thermokamera oder einem Pyrometer gemessen. Da die Temperatur des flüssigen Bads unterhalb der Schicht üblicherweise relativ genau bekannt ist und die Oberflächentemperatur der Schicht von der Dicke der Schicht des Gieß- oder Abdeckpulvers abhängt, kann von der gemessenen Oberflächentemperatur auf die Dicke der Schicht des Gieß- oder Abdeckpulvers rückgeschlossen werden. Obwohl die direkte Messung einfach ist, ist nachteilig daran, dass die Messung relativ ungenau ist und das Ergebnis zudem stark von der Isolierwirkung des verwendeten Pulvers abhängt. Außerdem muss beim Stranggießen üblicherweise auch der Gießspiegel in einer Kokille gemessen werden, da dieser während des Stranggießens - meist durch eine Gießspiegelregelung - innerhalb enger Grenzen gehalten werden muss. Bei der *indirekten Messung* wird einerseits die Höhenlage s_{P} einer Oberkante einer Schicht des Gieß- oder Abdeckpulvers im metallurgischen Gefäß und andererseits die Höhenlage s_{M} einer Oberkante des flüssigen Metalls im metallurgischen Gefäß gemessen. Die Messung der Höhenlage s_{P} kann z.B. durch einen Laser erfolgen. Eine zusätzliche Messung des Gießspiegels, z.B. durch eine radiometrische oder elektromagnetische Gießspiegelmessung, liefert die Höhenlage s_{M} des flüssigen Metalls im metallurgischen Gefäß. Die Dicke der Schicht des Gieß- oder Abdeckpulvers ergibt sich aus der Differenz der Höhenlagen zwischen s_{M} und s_{P}. Nachteilig an der indirekten Messung ist, dass unterschiedliche Messsysteme zum Einsatz kommen und insbes. elektromagnetische oder radiometrische Messsysteme problematisch sind. In schnellgießenden Stranggiessanlagen werden zudem häufig elektromagnetische Kokillenrührer verwendet, die die Signale elektromagnetischer Messsysteme stark verzerren oder gar unbrauchbar machen können. Radiometrische Messsysteme sind zwar gegenüber elektromagnetischen Feldern unempfindlich, allerdings ist der Einsatz radioaktiver Strahler im Bereich des Gießspiegels und somit in der Nähe der Gießbühne aus Gründen der Gesundheit/Arbeitssicherheit kritisch.

Aus der WO 2009/090025 A1 ist ein Verfahren zur Messung einer Dicke einer Schicht eines Gießpulvers in einer Kokille mittels Radartechnik bekannt, umfassend die Schritte: Messung einer Höhenlage einer Oberkante der Schicht des Gießpulvers s_{P} und Messung einer Höhenlage der Oberkante des flüssigen Metalls s_{M} in der Kokille, wobei eine Elektronik eine frequenzmodulierte elektromagnetische Welle mit Frequenzen > 5 GHz erzeugt, eine Radarantenne die Welle emittiert, die Oberkante des Gießpulvers und die Oberkante des flüssigen Metalls die Welle reflektieren, und die Elektronik die Höhenlage der Oberkante des Gießpulvers s_{P} sowie die Höhenlage der Oberkante des flüssigen Metalls s_{M} bestimmen. Anschließend wird die Dicke der Gießpulverschicht bestimmt. Damit die Radarwelle die Oberkante der Schicht des Gießpulvers und die Oberkante des Gießspiegels auflösen kann, weist die Radarwelle eine sehr große Bandbreite von > 20 GHz, z.B. 35 GHz, auf. Nachteilig an dieser Lösung ist, dass bei der Radarantenne und der Auswerteelektronik aufgrund der hohen Bandbreite nicht mehr auf günstige Standardkomponenten zurückgegriffen werden kann. Dadurch ist das System teuer. Außerdem haben Tests gezeigt, dass das Messsystem in der Praxis mit unterschiedlichen Gießpulvern unzuverlässig ist und oftmals keine oder zumindest ungenaue Messergebnisse liefert. Aus diesem Grund haben sich bis heute Radar-Messsysteme für die Dickenmessung einer Schicht eines Gießpulvers in der Praxis nicht durchsetzen können.

Aus der WO 00/11494 A1 ist ein Verfahren zur Dickenmessung einer Schlackenschicht in einem unten geschlossenen Behälter 1 mittels Radartechnik bekannt. Bei der Radarmessung werden elektromagnetische Wellen mit Frequenzen zwischen 5 und 25 GHz verwendet.

Wie das Verfahren zur Dickenmessung einer Gießpulverschicht in einer Kokille eingesetzt werden kann und wie zuverlässig zwischen den Oberkanten des Gießpulvers und des flüssigen Metalls unterschieden werden kann, geht aus der Schrift nicht hervor.

Schließlich ist aus der US 2004/0212529 A1 ein radarbasiertes Verfahren zur Füllstandsmessung bekannt. Die dabei verwendeten elektromagnetischen Wellen sind elliptisch oder zirkular polarisiert und weisen gemäß einer bevorzugten Ausführungsform Frequenzen zwischen 4 und 8 GHz sowie zwischen 18 und 28 GHz auf. Wie das Verfahren zur Dickenmessung einer Gießpulverschicht in einer Kokille eingesetzt werden kann und wie das Verfahren mit linear polarisierten elektromagnetischen Wellen durchgeführt werden kann, geht aus der Schrift nicht hervor.

Wie die Zuverlässigkeit eines radarbasierten Messsystems zur Dickenmessung einer Gießpulverschicht in einer Kokille gesteigert, die Genauigkeit erhöht und dennoch preisgünstige Standardkomponenten verwendet werden können, geht aus den Schriften nicht hervor.

### Zusammenfassung der Erfindung

Die Aufgabe der Erfindung besteht darin, die Zuverlässigkeit und die Genauigkeit einer Dickenmessung einer Schicht eines Gießpulvers in einer Kokille zu erhöhen, und die Kosten für die Dickenmessung zu senken.

Diese Aufgabe wird durch ein Verfahren zur Messung einer Dicke einer Schicht eines Gießpulvers in einer Kokille nach Anspruch 1 gelöst, wobei die Schicht ein flüssiges Metall (typischerweise Stahl oder eine Aluminium- bzw. Kupferlegierung) in der Kokille zumindest teilweise abdeckt, umfassend die Verfahrensschritte:
- Messung einer Höhenlage s_{P} einer Oberkante der Schicht, wobei eine erste frequenzmodulierte elektromagnetische Welle mit Frequenzen > 85 GHz , bevorzugt < 135 GHz, erzeugt wird, die erste Welle emittiert wird, die Oberkante der Schicht die erste Welle reflektiert, und die Höhenlage s_{P} der Oberkante der Schicht des Gießpulvers in Abhängigkeit einer Verzögerung zwischen der ersten emittierten Welle und der ersten reflektierten Welle bestimmt wird;
- Messung einer Höhenlage s_{M} einer Oberkante des flüssigen Metalls in der Kokille;
- Bestimmung der Dicke d der Schicht des Gießpulvers, z.B. durch d=|s_{P}-s_{M}|.

Vorteilhafte Ausgestaltungen der Erfindung sind Gegenstand der abhängigen Ansprüche.

Gemäß der Erfindung wird die Höhenlage s_{P} der Oberkante der Schicht des Gießpulvers in der Kokille zwar ebenfalls durch eine Radarmessung bestimmt, die Frequenzen und die Bandbreiten des Radarsignals sind aber völlig verschieden. Erfindungsgemäß wird eine hochfrequente erste frequenzmodulierte elektromagnetische Welle mit einer wesentlich höheren Frequenz von > 85 GHz, bevorzugt < 135 GHz, erzeugt, z.B. von einer ersten Elektronik. Diese erste Welle weist aber vorzugsweise nur eine geringe Bandbreite von < 5 GHz auf, z.B. von 2 bis 5 GHz. Die erste Welle wird anschließend emittiert, z.B. von einer der ersten Elektronik zugeordneten ersten Radarantenne. Die Oberkante der Schicht des Gießpulvers reflektiert die erste emittierte Welle und die Höhenlage s_{P} der Oberkante der Schicht des Gießpulvers wird in Abhängigkeit einer Verzögerung zwischen der ersten emittierten und der ersten reflektierten Radarwelle bestimmt. Die Messung der Höhenlage s_{M} der Oberkante des flüssigen Metalls kann zwar ebenfalls durch eine Radarmessung erfolgen, aber auch durch andere Messprinzipien, wie z.B. durch eine radiometrische oder eine elektromagnetische Messung (siehe z.B. die Sensoren *"Eddy Current Level Meter ECLM 2000 Series"* der Fa. Nireco (auch bekannt unter NKK Sensor), oder Sensoren der Fa. VUHZ).

Durch die Radarmessung der Höhenlage s_{P} einer Oberkante der Schicht des Gießpulvers in der Kokille wird die Höhenlage s_{P} sehr genau erfasst. Die Reflektion der emittierten Welle erfolgt weitgehend unabhängig von der Art, der chem. Zusammensetzung und der Isolierwirkung des Gießpulvers. Durch die geringe Bandbreite des Radarsignals kann zudem auf übliche Radarkomponenten zurückgegriffen werden. Außerdem hat sich herausgestellt, dass es ausreicht, wenn die erste frequenzmodulierte elektromagnetische Welle eine lineare Polarisation aufweist. Es ist zwar prinzipiell ebenfalls möglich, Radarwellen mit einer zirkularen oder elliptischen Polarisation einzusetzen, jedoch sind die dafür verwendeten Radarkomponenten, insbesondere die Antennensysteme, aufwändiger und teurer. Demnach ist es vorteilhaft, wenn die erste frequenzmodulierte elektromagnetische Welle linear polarisiert ist.

Gemäß einer vorteilhaften Ausführungsform erfolgt die Messung der Höhenlage s_{M} der Oberkante des flüssigen Metalls in der Kokille ebenfalls durch eine Radarmessung, wobei eine niederfrequente zweite frequenzmodulierte elektromagnetische Welle mit Frequenzen ≥ 1 GHz, bevorzugt < 13 GHz, erzeugt wird, die zweite Welle emittiert wird, die Oberkante des flüssigen Metalls die zweite Welle reflektiert, und die Höhenlage s_{M} der Oberkante des flüssigen Metalls in Abhängigkeit einer Verzögerung zwischen der zweiten emittierten Welle und der zweiten reflektierten Welle bestimmt wird. Die Erzeugung der zweiten Welle und vorzugsweise die Bestimmung der Höhenlage s_{M} kann durch eine einzige oder durch unterschiedliche Elektroniken erfolgen. Außerdem ist es möglich, dass eine einzige Elektronik sowohl die erste als auch die zweite Welle erzeugt und ggf. auch die Höhenlagen s_{P} und s_{M} bestimmt. Auch bei der zweiten frequenzmodulierten elektromagnetischen Welle ist es ausreichend, wenn diese linear polarisiert ist.

Gemäß dieser Ausführungsform sind die Frequenzen der ersten und zweiten Wellen sehr unterschiedlich. Für die Messung der Oberkante des Gießpulvers ist es erforderlich, dass relativ hohe Frequenzen > 85 GHz verwendet werden. Demgegenüber ist es für die Messung der Oberkante des flüssigen Metalls sehr vorteilhaft, niedrige Frequenzen < 13 GHz zu verwenden. Beide Radarsignale können eine geringe Bandbreite von < 5 GHz aufweisen, z.B. von 2 bis 5 GHz. In praktischen Messungen hat sich nämlich gezeigt, dass eine niederfrequente Welle mit Frequenzen zwischen 1 und 13 GHz zwar die Schicht eines Gießpulvers gut (d.h. ohne stark reflektiert zu werden) durchdringen kann, aber vom flüssigen Bad in der Kokille stark reflektiert wird. Somit kann auch die Höhenlage s_{M} der Oberkante des flüssigen Metalls in der Kokille zuverlässig, hochgenau und preisgünstig ermittelt werden.

Für den Schutz einer Elektronik ist es günstig, wenn diese in einem Bereich abseits der Kokille angeordnet ist, und eine emittierte Welle von der Elektronik zur einer Radarantenne und umgekehrt geführt wird und/oder eine emittierte Welle von einem Spiegel in Richtung des Gießpulvers in der Kokille und umgekehrt umgelenkt wird. Das Führen der Radarsignale kann z.B. durch einen Hohlleiter, das Umlenken der Radarsignale kann z.B. durch einen Hohlspiegel erfolgen. In beiden Fällen können die Elektroniken an Positionen angeordnet werden, an denen eine geringe Hitzebelastung besteht und damit effektiv vor Ausfall geschützt werden.

Alternativ dazu ist es möglich, eine Elektronik auch oberhalb der Kokille anzuordnen, insbesondere dann, wenn die Elektronik durch ein flüssiges oder gasförmiges Kühlmedium gekühlt wird.

Zur Führung des Radarsignals bzw. der Radarsignale ist es vorteilhaft, die erste und/oder die zweite emittierte Welle in einem Hohlleiter zu führen und/oder durch einen Spiegel umzulenken. Dies gilt *mutatis mutandis* auch für die erste und/oder die zweite reflektierte Welle. Dadurch werden die Signale nur wenig gestört bzw. nur wenig gedämpft. Außerdem wird die Anzahl der Leitungen reduziert.

Aufgrund des großen Frequenzunterschiedes zwischen der ersten und der zweiten emittierten Welle sowie zwischen der ersten und der zweiten reflektierten Welle ist es sogar möglich, alle Radarsignale (d.h. die erste und die zweite emittierte Welle sowie die erste und die zweite reflektierte Welle) in einem einzigen Hohlleiter zu führen, durch einen einzige Radarantenne zu emittieren bzw. durch einen einzigen Spiegel in Richtung des Gießpulvers in der Kokille umzulenken. Die Größe bzw. der Durchmesser des Radarkegels kann durch ein oder mehrere Linsen verändert werden.

Die Messung der Höhenlage s_{M} des flüssigen Metalls in der Kokille kann erfindungsgemäß auch durch eine radiometrische oder eine elektromagnetische Messung erfolgen.

Die erfindungsgemäße Aufgabe wird ebenfalls durch eine Vorrichtung zur Messung einer Dicke einer Schicht eines Gießpulvers in einer Kokille nach Anspruch 8 gelöst, wobei die Vorrichtung zur Durchführung des erfindungsgemäßen Verfahrens geeignet ist.

Vorteilhafte Ausgestaltungen der Erfindung sind Gegenstand der abhängigen Ansprüche.

Die erfindungsgemäße Vorrichtung umfasst:
- eine erste Elektronik zum Erzeugen einer ersten emittierten Welle mit einer Frequenz > 85 GHz, bevorzugt < 135 GHz, und zum Bestimmen einer Höhenlage s_{P} einer Oberkante der Schicht des Gießpulvers in der Kokille in Abhängigkeit einer Verzögerung zwischen der ersten emittierten Welle und einer ersten reflektierten Welle;
- eine erste Radarantenne zum Emittieren der ersten frequenzmodulierten elektromagnetischen Welle und zum Empfangen der ersten reflektierten elektromagnetischen Welle;
- eine Einrichtung zur Messung einer Höhenlage s_{M} einer Oberkante des flüssigen Metalls in der Kokille; und
- eine Recheneinheit zur Bestimmung der Dicke d der Schicht des Gießpulvers.

Hierbei ist es nicht zwingend erforderlich, dass die erste Elektronik zur Erzeugung der ersten frequenzmodulierten elektromagnetischen Welle mit Frequenzen > 85 GHz auch die Höhenlage der Oberkante der Schicht des Gießpulvers s_{P} misst. Die Messung der Höhenlage s_{P} kann auch durch eine separate Elektronik erfolgen. Bevorzugt ist allerdings, dass eine erste Elektronik sowohl die erste frequenzmodulierte elektromagnetische Welle erzeugt und die Höhenlage s_{P} misst.

Die Messeinrichtung zur Messung einer Höhenlage einer Oberkante des flüssigen Metalls s_{M} in der Kokille kann z.B. als eine radiometrische oder elektromagnetische Messeinrichtung ausgebildet sein.

Alternativ dazu kann die Einrichtung zur Messung einer Höhenlage einer Oberkante des flüssigen Metalls s_{M} in der Kokille auch als ein Radar-Messssystem ausgebildet sein, umfassend:
- eine zweite Radarantenne zum Emittieren einer zweiten frequenzmodulierten elektromagnetischen Welle und zum Empfangen einer zweiten reflektierten elektromagnetischen Welle;
- eine zweite Elektronik zum Erzeugen der zweiten emittierten Welle mit einer Frequenz ≥ 1 GHz, bevorzugt < 13 GHz und zum Bestimmen einer Höhenlage s_{M} der Oberkante des flüssigen Metalls in der Kokille in Abhängigkeit einer Verzögerung zwischen der zweiten emittierten Welle und der zweiten reflektierten Welle.

Hierbei ist es nicht zwingend erforderlich, dass die zweite Elektronik zur Erzeugung der zweiten frequenzmodulierten elektromagnetischen Welle mit Frequenzen > 1 GHz auch die Höhenlage der Oberkante der Schicht des flüssigen Metalls s_{M} misst. Die Messung der Höhenlage s_{M} kann auch durch eine separate Elektronik erfolgen. Bevorzugt ist allerdings, dass eine zweite Elektronik sowohl die zweite frequenzmodulierte elektromagnetische Welle erzeugt und die Höhenlage s_{M} misst.

Bei einer besonders bevorzugten Ausführungsform werden durch eine einzige Elektronik
- die erste und die zweite frequenzmodulierte elektromagnetische Welle erzeugt,
- die Höhenlage s_{P} und s_{M} gemessen, sowie
- die Schichtdicke d bestimmt.

Für den Schutz einer Elektronik ist es vorteilhaft, wenn die erste und/oder die zweite Elektronik in einem geschützten Bereich abseits der Kokille angeordnet ist.

Alternativ oder ergänzend zum Vorgenannten ist es möglich, dass zumindest eine Elektronik eine Kühleinrichtung aufweist, wobei die Elektronik z.B. durch ein flüssiges oder gasförmiges Kühlmedium gekühlt wird.

Zur Führung bzw. Umlenkung der Radarsignale ist es vorteilhaft, wenn zumindest zwischen einer Elektronik und einer Radarantenne ein Hohlleiter zum Führen einer elektromagnetischen Welle bzw. ein Spiegel zur Umlenkung einer elektromagnetischen Welle angeordnet ist.

Zum Schutz der Kabel bzw. der Hohlleiter vor mechanischen Beschädigungen und Hitze ist es vorteilhaft, dass ein die ersten und/oder die zweiten Wellen führendes Kabel durch ein Rohr, vorzugsweise ein Stahlrohr, geschützt wird.

Um die Dicke der Schicht des Gießpulvers an mehreren Positionen innerhalb der Kokille messen zu können, ist es vorteilhaft, wenn die Kokille mehrere erste Radarantennen und/oder mehrere zweite Radarantennen aufweist und/oder eine erste Radarantenne oder eine zweite Radarantenne verfahrbar ausgebildet ist.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei die Figuren zeigen:
Fig 1 ein teilweise geschnittener Aufriss eines Maschinenkopfes einer Stranggießanlage zur Herstellung eines runden Gießstranges
Fig 2 ein Grundriss der Kokille aus Fig 1
Fig 3 eine schematische Darstellung einer Elektronik zur Erzeugung einer ersten und einer zweiten frequenzmodulierten elektromagnetischen Welle
Fig 4 ein Grundriss einer Brammenkokille
Fig 5 eine schematische Darstellung der Frequenzen einer ersten frequenzmodulierten elektromagnetischen Welle
Fig 6 eine schematische Darstellung der Frequenzen einer ersten und einer zweiten frequenzmodulierten elektromagnetischen Welle

### Beschreibung der Ausführungsformen

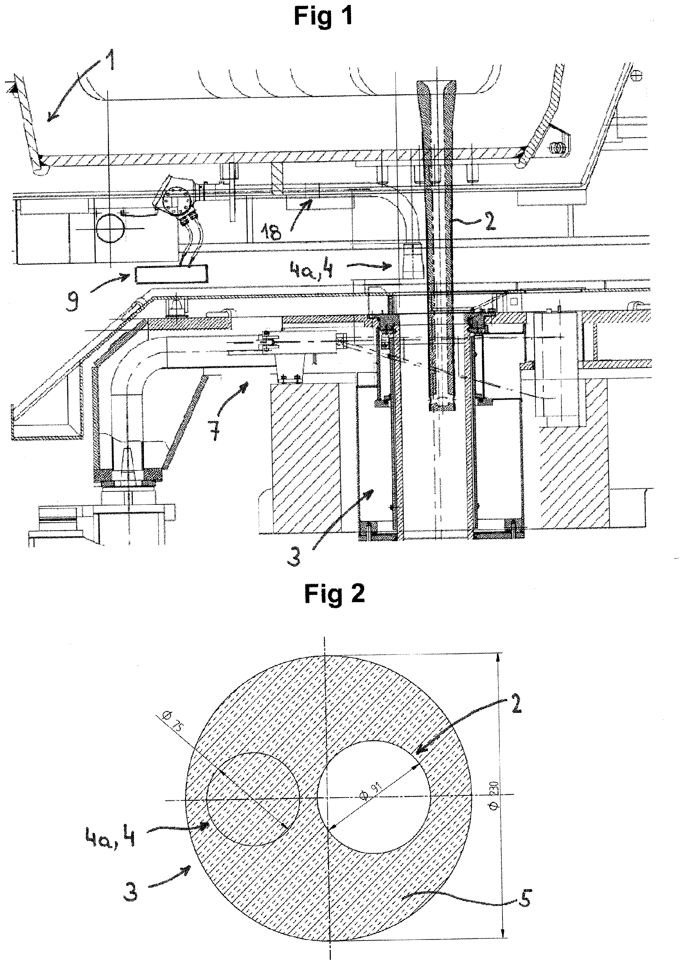

Die Fig 1 zeigt eine teilweise geschnittene Aufrissdarstellung eines Maschinenkopfes einer Stranggießanlage zum Stranggießen eines runden Stahlstranges mit Ø 230 mm. In diesem Fall wird flüssige Stahlschmelze von einem Verteiler 1 über ein Tauchrohr 2 in eine runde Kokille 3 eingefüllt. In der gekühlten Kokille 3 bildet sich im Bereich des Gießspiegels eine dünne Strangschale aus. Der dadurch gebildete Stahlstrang wird kontinuierlich aus der Kokille 3 ausgezogen und in der der Kokille nachfolgenden, hier nicht dargestellten, Strangführung geführt, gestützt und weiter abgekühlt. Um die Oxidation der Stahlschmelze zu reduzieren, wird die Stahlschmelze im Verteiler 1 durch ein Abdeckpulver und in der Kokille 3 durch ein Gießpulver abgedeckt. Durch das Abdeck- bzw. Gießpulver wird der Kontakt zwischen der Luftatmospähre und der Stahlschmelze reduziert. Das Gießpulver hat weiters die Aufgabe, eine ausreichende Schmierung zwischen der im Betrieb oszillierenden Kokille 3 und dem Stahlstrang zu gewährleisten, sodass der Stahlstrang nicht an der Wand bzw. den Wänden der Kokille 3 anhaften kann. Die Höhenlage s_{M} der Oberkante der Stahlschmelze (kurz Gießspiegel) in der Kokille 3 wird in Fig. 1 z.B. durch eine radiometrische oder elektromagnetische Gießspiegelmesseinrichtung 7 gemessen. Alternativ dazu könnte die Höhenlage des Gießspiegels in der Kokille 3 auch durch eine Radarmessung oder andere, grundsätzlich bekannte, Messprinzipien erfolgen.

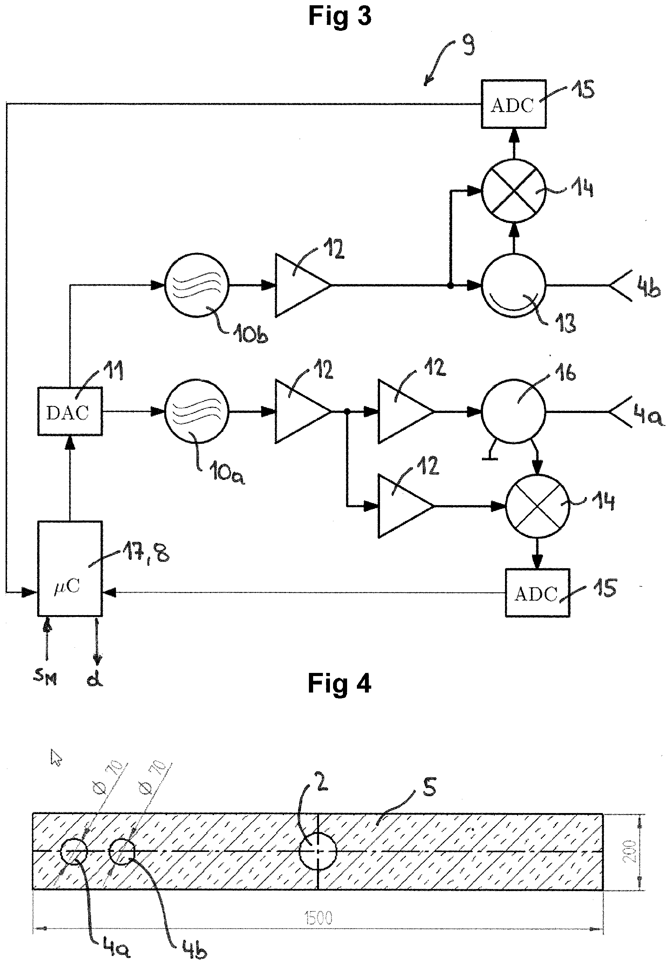

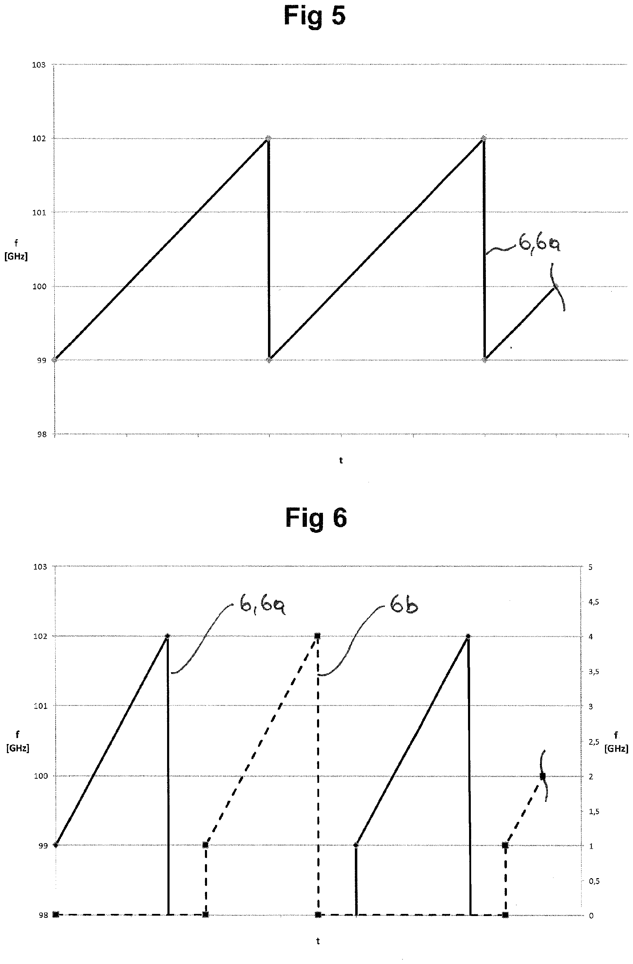

Nachfolgend wird die Funktionsweise der Dickenmessung einer Schicht 5 eines Gießpulvers in der Kokille 3 (siehe Fig 2) erklärt. Eine in Fig 3 dargestellte Elektronik 9 erzeugt mittels einer als Microcontroller 17 ausgebildeten Recheneinheit 8, des Digital-Analog Wandlers 11 und des Signalgenerators 10a eine erste frequenzmodulierte elektromagnetische Welle mit Frequenzen > 85 GHz (siehe z.B. Fig. 5 mit der Signalform der ersten Welle im Frequenzbereich über der Zeit t). Die vom Signalgenerator 10a erzeugte erste Welle wird durch Verstärker 12 verstärkt und von der ersten Radarantenne 4a emittiert. Die so emittierte erste Welle mit einer Frequenz zwischen 99 und 102 GHz und einer niedrigen Bandbreite von 3 GHz wird von der Oberkante der Schicht 5 des Gießpulvers reflektiert und von der Radarantenne 4 einem Rat-race Koppler 16 zugeführt, der von der reflektierten ersten Welle die emittierte erste Welle abtrennt. Die emittierte erste Welle und die vom Rat-race Koppler 16 abgetrennte reflektierte erste Welle werden vom Mischer 14 gemischt und nach einer Analog-Digital Wandlung im ADC 15 dem Microcontroller 17 zugeführt. Der Microcontroller 17 berechnet einerseits in bekannter Weise die Höhenlage s_{P} der Oberkante der Schicht 5 des Gießpulvers in Abhängigkeit einer Verzögerung zwischen der ersten emittierten Welle und der ersten reflektierten Welle und erhält andererseits über einen Eingang von der Gießspiegelmesseinrichtung 7 die Höhenlage s_{M} der Oberkante des flüssigen Metalls in der Kokille 3. Aus den Höhenlagen s_{P} und s_{M} berechnet der Microcontroller 17 bzw. die Recheneinheit 8 durch Differenzbildung zwischen s_{P} und s_{M} die Dicke d der Schicht des Gießpulvers in der Kokille. Natürlich kann die Berechnung der Schichtdicke d auch durch ein anderes System gemacht werden, wie z.B. ein Level 1 PLC, das Zugriff auf s_{M} uns s_{P} hat. Der obere Teil der in Fig 3 dargestellten Elektronik 9 mit dem Signalgenerator 10b ist bei der Messung der Höhenlage s_{P} der Oberkante der Schicht des Gießpulvers 5 inaktiv.

Die Elektronik 9 ist in Fig 1 in einem geschützten Bereich abseits der Kokille 3 angeordnet, sodass die Elektronik weder hoher Hitzebelastung noch den Vibrationen der oszillierenden Kokille 3 ausgesetzt ist. Die erste Welle 6 (siehe Fig 5) wird von der Elektronik 9 in einen von einem Stahlrohr 18 geschützten Hohlleiter eingekoppelt und so zur ersten Radarantenne 4, 4a geführt. Durch das Stahlrohr 18 wird das Kabel mit dem Hohlleiter vor Hitze, mechanischen Beschädigungen und Stahlspritzern geschützt.

Da das Grundprinzip der Füllstandmessung mittels Radartechnik dem Fachmann wohl bekannt ist, siehe z.B. die Broschüre Detlef Brumbi: Grundlagen der Radartechnik zur Füllstandmessung, 4. Auflage, Krohne Messtechnik GmbH & Co. KG, 2003 kann in diesem Dokument auf detaillierte Ausführungen zur Radartechnik verzichtet werden. Als Rückgriff auf die Grundlagen der Radartechnik wird diese Schrift per Referenz miteinbezogen.

Die Fig 2 zeigt eine Grundrissdarstellung der Kokille 3 der Stranggießanlage von Fig 1 mit dem Tauchrohr 2 und der Radarantenne 4 bzw. 4a. Daraus ist ersichtlich, dass die Radarmessung zur Bestimmung der Höhenlage s_{P} der Oberkante der Schicht 5 des Gießpulvers auch bei sehr gedrängten Platzverhältnissen geeignet ist.

Die Fig 4 zeigt eine Grundrissdarstellung einer Kokille 3 einer Brammen-Stranggießanlage mit einem zentral angeordneten Tauchrohr 2 und den Radarantennen 4a und 4b. Gemäß dieser Ausführungsform wird auch die Höhenlage s_{M} der Oberkante des flüssigen Metalls in der Kokille 3 mittels Radartechnik bestimmt. Diese Funktionalität wird wiederum anhand der Elektronik 9 in Fig 3 erklärt. Ein Signalgenerator 10b erzeugt eine zweite elektromagnetische Welle 6b mit Frequenzen zwischen 1 GHz und 4 GHz. Die zweite Welle wird über den Verstärker 12 verstärkt und über einen Zirkulator 13 zur zweiten Radarantenne 4b geleitet und von dieser emittiert. Da die zweite Welle im Vergleich zur ersten Welle sehr niedrige Frequenzen aufweist, kann diese die Gießpulverschicht passieren und wird an der Oberkante der flüssigen Stahlschmelze in der Kokille 3 reflektiert. Die Höhenlage s_{M} der Oberkante der Stahlschmelze wird wiederum in an sich bekannter Weise in Abhängigkeit einer Verzögerung zwischen der zweiten emittierten Welle und der zweiten reflektierten Welle bestimmt. In diesem Fall wird der Eingang für s_{M} der Elektronik 9 in Fig 3 nicht genutzt bzw. vom Mikrocontroller 17 nicht ausgelesen.

Die Fig 5 zeigt die Signalform einer linear polarisierten ersten frequenzmodulierten elektromagnetischen Welle 6 im Frequenzbereich in Abhängigkeit der Zeit t. Die Welle 6 hat die Signalform eines Sägezahns und führt einen sog. Frequenzsweep zwischen 99 und 102 GHz durch. Nach dem Erreichen der Maximalfrequenz von 102 GHz fällt die Frequenz wieder auf die Minimalfrequenz von 99 GHz ab und die Frequenz steigt wiederum linear in Abhängigkeit der Zeit an. Denkbar wäre es auch, nach dem Abfallen der Frequenz eine Pausenzeit lang kein Signal zu senden und danach einen weiteren Frequenzsweep durchzuführen. Dies kann insbesondere dann sinnvoll sein, wenn durch ein und dieselbe Radarantenne sowohl die Höhenlage s_{P} der Oberkante der Schicht des Gießpulvers in der Kokille als auch die Höhenlage s_{M} der Oberkante des flüssigen Metalls in der Kokille gemessen wird.

Die Fig 6 zeigt die Signalformen einer linear polarisierten ersten frequenzmodulierten elektromagnetischen Welle 6a und einer ebenfalls linear polarisierten zweiten frequenzmodulierten elektromagnetischen Welle 6b im Frequenzbereich über der Zeit t. Die erste Welle 6a ist hinsichtlich der Frequenzen beim Frequenzsweep identisch zu Fig 5. Allerdings macht das Signal zwischen zwei Frequenzsweeps eine Pause, in der die zweite Welle 6b von derselben Radarantenne ausgesendet wird. Auch die zweite Welle 6b führt wiederum einen Frequenzsweep aus, allerdings zwischen 1 und 4 GHz. Nach dem Erreichen der Maximalfrequenz von 4 GHz pausiert das Signal für eine bestimmte Zeit, wobei danach die Frequenz wiederum linear in Abhängigkeit der Zeit ansteigt.

Bei einer alternativen Ausführungsform zu Fig 6 kann die erste Welle 6a auch zeitglich mit der zweiten Welle 6b emittiert werden. Dies ist aufgrund der Trennung der Frequenzbänder der ersten Welle 6a (Frequenzen zwischen 99 und 102 GHz) und der zweiten Welle 6b (Frequenzen zwischen 1 und 4 GHz) möglich. Demnach ist es im Allgemeinen nicht notwendig, die ersten und zweiten Wellen 6a, 6b sequenziell bzw. nach einer Pausenzeit nacheinander zu senden. Durch das zeitgleiche Aussenden der ersten und zweiten Welle 6a, 6b kann die Abtastfrequenz für die Dicke der Schicht des Gießpulvers erhöht werden, ohne die Genauigkeit oder Zuverlässigkeit des Messsystems und Messverfahrens einzuschränken.

### Bezugszeichenliste

- 1: Verteiler
- 2: Tauchrohr (engl. SEN)
- 3: Kokille
- 4, 4a: erste Radarantenne
- 4b: zweite Radarantenne
- 5: Schicht eines Gießpulvers
- 6, 6a: erste frequenzmodulierte elektromagnetische Welle
- 6b: zweite frequenzmodulierte elektromagnetische Welle
- 7: Gießspiegelmesseinrichtung
- 8: Recheneinheit
- 9: Elektronik
- 10a, 10b: Signalgenerator
- 11: Digital-Analog-Wandler (DAC)
- 12: Verstärker
- 13: Zirkulator
- 14: Mischer
- 15: Analog Digital Wandler (ADC)
- 16: Rat-race Koppler
- 17: Microcontoller µC
- 18: Stahlrohr

- d: Dicke der Schicht des Gießpulvers
- f: Frequenz
- s_{P}: Höhenlage der Oberkante der Schicht des Gießpulvers in der Kokille
- s_{M}: Höhenlage der Oberkante des flüssigen Metalls in der Kokille
- t: Zeit

## Patentansprüche

1. Verfahren zur Messung einer Dicke d einer Schicht eines Gießpulvers (5) in einer Kokille (3), wobei die Schicht ein flüssiges Metall in der Kokille (3) zumindest teilweise abdeckt, umfassend die Verfahrensschritte:
- Messung einer Höhenlage s_{P} einer Oberkante der Schicht, wobei eine erste frequenzmodulierte elektromagnetische Welle (6, 6a) mit Frequenzen > 85 GHz, bevorzugt < 135 GHz, erzeugt wird, die erste Welle (6, 6a) emittiert wird, die Oberkante der Schicht des Gießpulvers (5) die erste Welle (6, 6a) reflektiert, und die Höhenlage s_{P} der Oberkante der Schicht in Abhängigkeit einer Verzögerung zwischen der ersten emittierten Welle (6, 6a) und der ersten reflektierten Welle bestimmt wird;
- Messung einer Höhenlage s_{M} einer Oberkante des flüssigen Metalls in der Kokille (3); und
- Bestimmung der Dicke d der Schicht des Gießpulvers.

2. Verfahren nach Anspruch 1, **dadurch gekennzeichnet, dass** bei der Messung der Höhenlage s_{M} der Oberkante des flüssigen Metalls in der Kokille (3) eine zweite frequenzmodulierte elektromagnetische Welle (6b) mit Frequenzen ≥ 1 GHz, bevorzugt < 13 GHz, erzeugt wird, die zweite Welle (6b) emittiert wird, die Oberkante des flüssigen Metalls die zweite Welle (6b) reflektiert, und die Höhenlage s_{M} der Oberkante des flüssigen Metalls in Abhängigkeit einer Verzögerung zwischen der zweiten emittierten Welle (6b) und der zweiten reflektierten Welle bestimmt wird.

3. Verfahren nach Anspruch 1 oder 2, **dadurch gekennzeichnet, dass** eine Elektronik (9) in einem Bereich abseits der Kokille (3) angeordnet ist, und eine emittierte Welle (6, 6a, 6b) von der Elektronik (9) zu einer Radarantenne (4, 4a, 4b) und vice versa geführt wird und/oder eine emittierte Welle (6, 6a, 6b) von einem Spiegel in Richtung des Gießpulvers in der Kokille (3) und vice versa umgelenkt wird.

4. Verfahren nach Anspruch 1 oder 2, **dadurch gekennzeichnet, dass** eine Elektronik (9) oberhalb der Kokille (3) angeordnet ist, wobei die Elektronik (9) vorzugsweise durch ein flüssiges oder gasförmiges Kühlmedium gekühlt wird.

5. Verfahren nach einem der Ansprüche 1 bis 4, **dadurch gekennzeichnet, dass** die erste (6, 6a) und/oder die zweite emittierte Welle (6b) in einem Hohlleiter zu der Radarantenne (4, 4a, 4b) geführt wird und/oder durch einen Spiegel in Richtung des Gießpulvers in der Kokille (3) umgelenkt wird.

6. Verfahren nach Anspruch 5, **dadurch gekennzeichnet, dass** die erste (6, 6a) und die zweite emittierte Welle (6b) sowie die erste und die zweite reflektierte Welle in einen einzigen Hohlleiter geführt werden und/oder durch einen einzigen Spiegel umgelenkt werden.

7. Verfahren nach Anspruch 1, **dadurch gekennzeichnet, dass** die Messung der Höhenlage s_{M} des flüssigen Metalls in der Kokille (3) durch eine radiometrische oder eine elektromagnetische Messung erfolgt.

8. Vorrichtung zur Messung einer Dicke einer Schicht eines Gießpulvers (5) in einer Kokille (3) zur Durchführung des Verfahrens nach einem der vorhergehenden Ansprüche, umfassend:
- eine erste Elektronik (9) zum Erzeugen einer ersten emittierten Welle (6, 6a) mit einer Frequenz > 85 GHz, bevorzugt < 135 GHz, und zum Bestimmen einer Höhenlage s_{P} einer Oberkante der Schicht des Gießpulvers in der Kokille (3) in Abhängigkeit einer Verzögerung zwischen der ersten emittierten Welle (6, 6a) und einer ersten reflektierten Welle;
- eine erste Radarantenne (4, 4a) zum Emittieren der ersten frequenzmodulierten elektromagnetischen Welle (6, 6a) und zum Empfangen der ersten reflektierten elektromagnetischen Welle;
- eine Einrichtung (7) zur Messung einer Höhenlage s_{M} einer Oberkante des flüssigen Metalls in der Kokille (3); und
- eine Recheneinheit (8, 17) zur Bestimmung der Dicke d der Schicht des Gießpulvers (5).

9. Vorrichtung nach Anspruch 8, **dadurch gekennzeichnet, dass** die Einrichtung zur Messung der Höhenlage s_{M} der Oberkante des flüssigen Metalls in der Kokille (3) umfasst:
- eine zweite Radarantenne (4b) zum Emittieren einer zweiten frequenzmodulierten elektromagnetischen Welle (6b) und zum Empfangen einer zweiten reflektierten elektromagnetischen Welle;
- eine zweite Elektronik (9) zum Erzeugen der zweiten emittierten Welle (6b) mit einer Frequenz ≥ 1 GHz, bevorzugt < 13 GHz und zum Bestimmen einer Höhenlage s_{M} der Oberkante des flüssigen Metalls in der Kokille (3) in Abhängigkeit einer Verzögerung zwischen der zweiten emittierten Welle (6b) und der zweiten reflektierten Welle.

10. Vorrichtung nach einem der Ansprüche 8 oder 9, **dadurch gekennzeichnet, dass** die erste und/oder die zweite Elektronik (9) in einem geschützten Bereich abseits der Kokille (3) angeordnet ist.

11. Vorrichtung nach einem der Ansprüche 8 bis 10, **dadurch gekennzeichnet, dass** die erste und/oder die zweite Elektronik (9) eine Kühleinrichtung aufweist, wobei die erste und/oder die zweite Elektronik (9) durch ein flüssiges oder gasförmiges Kühlmedium gekühlt wird.

12. Vorrichtung nach Anspruch 10, **dadurch gekennzeichnet, dass** zwischen einer Elektronik (9) und einer Radarantenne (4, 4a, 4b), ein Hohlleiter zum Führen einer elektromagnetischen Welle und/oder ein Spiegel zur Umlenkung einer elektromagnetischen Welle angeordnet ist.

13. Vorrichtung nach einem der Ansprüche 8 bis 12, **dadurch gekennzeichnet, dass** ein die ersten und/oder die zweiten Wellen (6, 6a, 6b) führendes Kabel durch ein Rohr, vorzugsweise ein Stahlrohr (18), geschützt wird.

14. Vorrichtung nach einem der Ansprüche 8 bis 13, **dadurch gekennzeichnet, dass** die Kokille (3) mehrere Radarantennen (4, 4a, 4b) aufweist und/oder eine Radarantenne (4, 4a, 4b) verfahrbar ausgebildet ist.

15. Vorrichtung nach Anspruch 8, **dadurch gekennzeichnet, dass** die Einrichtung (7) zur Messung einer Höhenlage s_{M} einer Oberkante des flüssigen Metalls in der Kokille (3) als eine radiometrische oder elektromagnetische Messeinrichtung (7) ausgebildet ist.

## Claims

1. Method for measuring a thickness d of a layer of a casting powder (5) in a mould (3), wherein the layer at least partially covers a liquid metal in the mould (3), comprising the method steps of:
- measuring a height position s_{P} of an upper edge of the layer, wherein a first frequency-modulated electromagnetic wave (6, 6a) with frequencies of > 85 GHz, preferably < 135 GHz, is generated, the first wave (6, 6a) is emitted, the upper edge of the layer of the casting powder (5) reflects the first wave (6, 6a), and the height position s_{P} of the upper edge of the layer is determined on the basis of a delay between the first emitted wave (6, 6a) and the first reflected wave;
- measuring a height position s_{M} of an upper edge of the liquid metal in the mould (3); and
- determining the thickness d of the layer of the casting powder.

2. Method according to Claim 1, **characterized in that**, when measuring the height position s_{M} of the upper edge of the liquid metal in the mould (3), a second frequency-modulated electromagnetic wave (6b) with frequencies of ≥ 1 GHz, preferably < 13 GHz, is generated, the second wave (6b) is emitted, the upper edge of the liquid metal reflects the second wave (6b), and the height position s_{M} of the upper edge of the liquid metal is determined on the basis of a delay between the second emitted wave (6b) and the second reflected wave.

3. Method according to Claim 1 or 2, **characterized in that** an electronic system (9) is arranged in a region remote from the mould (3), and an emitted wave (6, 6a, 6b) is guided from the electronic system (9) to a radar antenna (4, 4a, 4b) and vice versa, and/or an emitted wave (6, 6a, 6b) is deflected by a mirror in the direction of the casting powder in the mould (3) and vice versa.

4. Method according to Claim 1 or 2, **characterized in that** an electronic system (9) is arranged above the mould (3), wherein the electronic system (9) is preferably cooled by a liquid or gaseous cooling medium.

5. Method according to one of Claims 1 to 4, **characterized in that** the first emitted wave (6, 6a) and/or the second emitted wave (6b) is/are guided in a waveguide to the radar antenna (4, 4a, 4b) and/or deflected by a mirror in the direction of the casting powder in the mould (3).

6. Method according to Claim 5, **characterized in that** the first emitted wave (6, 6a) and the second emitted wave (6b) and the first and second reflected waves are guided in a single waveguide and/or deflected by a single mirror.

7. Method according to Claim 1, **characterized in that** the height position s_{M} of the liquid metal in the mould (3) is measured by means of a radiometric or electromagnetic measurement.

8. Apparatus for measuring a thickness of a layer of a casting powder (5) in a mould (3) for carrying out the method according to one of the preceding claims, comprising:
- a first electronic system (9) for generating a first emitted wave (6, 6a) with a frequency of > 85 GHz, preferably < 135 GHz, and for determining a height position s_{P} of an upper edge of the layer of the casting powder in the mould (3) on the basis of a delay between the first emitted wave (6, 6a) and a first reflected wave;
- a first radar antenna (4, 4a) for emitting the first frequency-modulated electromagnetic wave (6, 6a) and for receiving the first reflected electromagnetic wave;
- a device (7) for measuring a height position s_{M} of an upper edge of the liquid metal in the mould (3); and
- a computing unit (8, 17) for determining the thickness d of the layer of the casting powder (5).

9. Apparatus according to Claim 8, **characterized in that** the device for measuring the height position s_{M} of the upper edge of the liquid metal in the mould (3) comprises:
- a second radar antenna (4b) for emitting a second frequency-modulated electromagnetic wave (6b) and for receiving a second reflected electromagnetic wave;
- a second electronic system (9) for generating the second emitted wave (6b) with a frequency of ≥ 1 GHz, preferably < 13 GHz, and for determining a height position s_{M} of the upper edge of the liquid metal in the mould (3) on the basis of a delay between the second emitted wave (6b) and the second reflected wave.

10. Apparatus according to either of Claims 8 and 9, **characterized in that** the first and/or the second electronic system (9) is/are arranged in a protected region remote from the mould (3).

11. Apparatus according to one of Claims 8 to 10, **characterized in that** the first and/or the second electronic system (9) has/have a cooling device, wherein the first and/or the second electronic system (9) is/are cooled by liquid or gaseous cooling medium.

12. Apparatus according to Claim 10, **characterized in that** a waveguide for guiding an electromagnetic wave and/or a mirror for deflecting an electromagnetic wave is/are arranged between an electronic system (9) and a radar antenna (4, 4a, 4b).

13. Apparatus according to one of Claims 8 to 12, **characterized in that** a cable carrying the first and/or the second waves (6, 6a, 6b) is protected by a pipe, preferably a steel pipe (18).

14. Apparatus according to one of Claims 8 to 13, **characterized in that** the mould (3) has a plurality of radar antennas (4, 4a, 4b) and/or a radar antenna (4, 4a, 4b) is designed to be movable.

15. Apparatus according to Claim 8, **characterized in that** the device (7) for measuring a height position s_{M} of an upper edge of the liquid metal in the mould (3) is in the form of a radiometric or electromagnetic measuring device (7).

## Revendications

1. Procédé destiné à la mesure d'une épaisseur d d'une couche d'une poudre de coulée (5) dans une lingotière (3) ; dans lequel la couche recouvre au moins en partie un métal en fusion dans la lingotière (3), le procédé comprenant les étapes opératoires dans lesquelles :
on mesure une position en hauteur s_{P} d'un bord supérieur de la couche, mesure au cours de laquelle une première onde électromagnétique modulée en fréquence (6, 6a) avec des fréquences > 85 GHz, de préférence < 135 GHz est générée, la première onde (6, 6a) est émise, le bord supérieur de la couche de la poudre de coulée (5) réfléchit la première onde (6, 6a), et la position en hauteur sₚ du bord supérieur de la couche est déterminée en fonction d'un retard entre la première onde (6, 6a) qui a été émise et la première onde qui a été réfléchie;
on mesure une position en hauteur s_{M} d'un bord supérieur du métal en fusion dans la lingotière (3); et
on détermine l'épaisseur d de la couche de la poudre de coulée.

2. Procédé selon la revendication 1, **caractérisé en ce que**, au cours de la mesure de la position en hauteur s_{M} du bord supérieur du métal en fusion dans la lingotière (3), une deuxième onde électromagnétique modulée en fréquence (6b) avec des fréquences ≥ 1 GHz, de préférence < 13 GHz est générée, la deuxième onde (6b) est émise, le bord supérieur du métal en fusion réfléchit la deuxième onde (6b), et la position en hauteur s_{M} du bord supérieur du métal en fusion est déterminée en fonction d'un retard entre la deuxième onde (6b) qui a été émise et la deuxième onde qui a été réfléchie.

3. Procédé selon la revendication 1 ou 2, **caractérisé en ce qu'**un système électronique (9) est disposé dans une zone à l'écart de la lingotière (3), et une onde (6, 6a, 6b) qui a été émise est guidée à partir du système électronique (9) en direction d'une antenne radar (4, 4a, 4b) et vice versa et/ou une onde (6, 6a, 6b) qui a été émise est déviée à partir d'un miroir dans la direction de la poudre de coulée dans la lingotière (3) et vice versa.

4. Procédé selon la revendication 1 ou 2, **caractérisé en ce qu'**un système électronique (9) est disposé au-dessus de la lingotière (3) ; dans lequel le système électronique (9) est de préférence refroidi par l'intermédiaire d'un milieu de refroidissement liquide ou gazeux.

5. Procédé selon l'une quelconque des revendications 1 à 4, **caractérisé en ce que** la première onde (6, 6a) et/ou la deuxième onde (6b) qui a/ont été émise(s) est/sont guidée(s) dans un guide d'onde en direction de l'antenne radar (4, 4a, 4b) et/ou est/sont déviée(s) par l'intermédiaire d'un miroir dans la direction de la poudre de coulée dans la lingotière (3).

6. Procédé selon la revendication 5, **caractérisé en ce que** la première (6, 6a) et la deuxième onde (6b) qui ont été émises, de même que la première onde et la deuxième onde qui ont été réfléchies sont guidées dans un guide d'onde unique et/ou sont déviées par l'intermédiaire d'un miroir unique.

7. Procédé selon la revendication 1, **caractérisé en ce que** la mesure de la position en hauteur s_{M} du métal en fusion dans la lingotière (3) a lieu par l'intermédiaire d'une mesure radiométrique ou d'une mesure électromagnétique.

8. Dispositif destiné à la mesure d'une épaisseur d'une couche d'une poudre de coulée (5) dans une lingotière (3) à des fins de mise en œuvre du procédé selon l'une quelconque des revendications précédentes, qui comprend :
un premier système électronique (9) qui est destiné à générer une première onde (6, 6a) qui a été émise avec une fréquence > 85 GHz, de préférence < 135 GHz, et à déterminer une position en hauteur sₚ d'un bord supérieur de la couche de la poudre de coulée dans la lingotière (3) en fonction d'un retard entre la première onde (6, 6a) qui a été émise et une première onde qui a été réfléchie;
une première antenne radar (4, 4a) qui est destinée à émettre la première onde électromagnétique modulée en fréquence (6, 6a) et à recevoir la première onde électromagnétique qui a été réfléchie;
un mécanisme (7) qui est destiné à la mesure d'une position en hauteur s_{M} d'un bord supérieur du métal en fusion dans la lingotière (3); et
une unité de calcul (8, 17) qui est destinée à déterminer l'épaisseur d de la couche de la poudre de coulée (5).

9. Dispositif selon la revendication 8, **caractérisé en ce que** le mécanisme qui est destiné à la mesure de la position en hauteur s_{M} du bord supérieur du métal en fusion dans la lingotière (3) comprend :
une deuxième antenne radar (4b) qui est destinée à émettre une deuxième onde électromagnétique modulée en fréquence (6b) et à recevoir une deuxième onde électromagnétique qui a été réfléchie;
un deuxième système électronique (9) qui est destiné à générer la deuxième onde (6b) qui a été réfléchie avec une fréquence ≥ 1 GHz, de préférence < 13 GHz et à déterminer une position en hauteur s_{M} du bord supérieur du métal en fusion dans la lingotière (3) en fonction d'un retard entre la deuxième onde (6b) qui a été émise et la deuxième onde qui a été réfléchie.

10. Dispositif selon la revendication 8 ou 9, **caractérisé en ce que** le premier et/ou le deuxième système électronique (9) est/sont disposé (s) dans une zone protégée à l'écart de la lingotière (3).

11. Dispositif selon l'une quelconque des revendications 8 à 10, **caractérisé en ce que** le premier et/ou le deuxième système électronique (9) présente(nt) un mécanisme de refroidissement ; dans lequel le premier et/ou le deuxième système électronique (9) est/sont refroidi(s) par l'intermédiaire d'un milieu de refroidissement liquide ou gazeux.

12. Dispositif selon la revendication 10, **caractérisé en ce que**, entre un système électronique (9) et une antenne radar (4, 4a, 4b), est disposé un guide d'onde qui est destiné au guidage d'une onde électromagnétique et/ou un miroir à des fins de déviation d'une onde électromagnétique.

13. Dispositif selon l'une quelconque des revendications 8 à 12, **caractérisé en ce qu'**un câble qui guide la première et/ou la deuxième onde (6, 6a, 6b) est protégé par l'intermédiaire d'un tube, de préférence par l'intermédiaire d'un tube en acier (18) .

14. Dispositif selon l'une quelconque des revendications 8 à 13, **caractérisé en ce que** la lingotière (3) présente plusieurs antennes radars (4, 4a, 4b) et/ou une antenne radar (4, 4a, 4b) est réalisée de manière à pouvoir être déplacée.

15. Dispositif selon la revendication 8, **caractérisé en ce que** le mécanisme (7) qui est destiné à la mesure d'une position en hauteur s_{M} d'un bord supérieur du métal en fusion dans la lingotière (3) est réalisé sous la forme d'un mécanisme de mesure (7) de type radiométrique ou électromagnétique.
